(19) Europäisches Patentamt
European Patent Office
Office européen des brevets

(11) **EP 2 236 630 A1**

(12) **EUROPEAN PATENT APPLICATION**

(43) Date of publication:
**06.10.2010 Bulletin 2010/40**

(21) Application number: **09004912.3**

(22) Date of filing: **02.04.2009**

(51) Int Cl.:
*C13D 3/02* [(2006.01)]    *C13D 3/12* [(2006.01)]
*B01J 20/04* [(2006.01)]    *B01J 20/12* [(2006.01)]
*C23C 22/05* [(2006.01)]

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **SÜD-CHEMIE AG**
**80333 München (DE)**

(72) Inventors:
• **Sohling, Ulrich**
 **85356 Freising (DE)**
• **Ruf, Friedrich**
 **84184 Ast (DE)**

• **Ramos Filho, Solon José**
 **Sao Paulo (BR)**
• **Mangialardo, Roberto Clóvis**
 **Sao José do Campos/SP (BR)**
• **Ortiz Niembro, José Antonio**
 **72590 Puebla (MX)**
• **Condemarin, Rosalina**
 **San Isidro; Lima 27 (PE)**

(74) Representative: **Stolmár, Matthias et al**
 **Stolmár Scheele & Partner**
 **Patentanwälte**
 **Blumenstrasse 17**
 **80331 München (DE)**

(54) **Method for purification of crude sugar juices**

(57) The invention is directed to a process for obtaining white sugar from e.g. sugar cane by treating the crude sugar juice with acid activated bentonite preferably selected from the group of smectites, whereby the acid activated bentonite mixture replaces the traditional environmental unfriendly sulfitation process. The acid-activated clay together with polyaluminium salts, and preferably phosphoric and/or sulfuric acid allows obtaining a high quality white sugar.

Fig. 1

EP 2 236 630 A1

**Description**

This invention relates to a method for purification of crude sugar juices obtained by extraction of sugar containing plants and an adsorbent which is in particular suited for the purification of crude sugar juice.

Sugar is produced in industrial scale from sugar beets and sugar cane. For extracting the sugar the cane is milled such that the plant cells of the cane are ruptured by pressure to release the sugar-bearing juice. Hot water may be added to the crushed cane to improve extraction of the sugar compounds. For releasing the sugar from sugar beets, the beets are chopped into small pieces that are then cooked with a small amount of water. The crude sugar juice is then released by pressing the mixture through a mill.

The crude sugar juices obtained from sugar cane and sugar beet are similar in composition and, therefore, can be further purified in basically the same way.

The crude sugar juice is turbid and dirty, greenish in colour and acidic. It contains, besides the requested sugar (sucrose), other components which have to be removed during sugar refining. The so called non-sugar components (NS compounds) comprise organic compounds, for example invert sugar, raffinose and ketoses, organic acids, proteins, polypeptides, amino acids, enzymes etc., as well as inorganic compounds, for example salts of potassium, sodium, calcium and magnesium with anions chloride, phosphate, sulfate and nitrate. Phosphates in the crude juice are present in two forms, as inorganic phosphates and as organic phosphates. The origin of the inorganic phosphates is due to addition of fertilizers in the treatment of the cultivation soils. Their concentration in the crude sugar juice is below 0.4 wt.-%. The organic phosphates are contained in the crude juice as gums in an amount of about 0.30 - 0.60 wt.-% and in the form of other phosphatides in an amount of about 0.03 - 0.05 wt.-%. Besides the a.m. ions the crude sugar juice contains oxalate, bicarbonate and carbonate ions. The crude juice reacts acidic and the low pH value catalyses the hydrolysis of sucrose, thereby reducing the yield of solid sugar.

In case of the sugar cane process, for purification the crude juice is first mixed with calcium hydroxide (lime) in order to increase the pH to a value of from about 6.0 to 8.0. The calcium ions introduced react with carbonate ions, oxalate ions and other NS compounds present in the crude sugar juice to form a precipitate. To support precipitation of colloidal components, organic polymers are often added to the crude sugar juice to act as flocculants. These precipitates often form very hard scales / incrustations that adhere quite firmly to the metallic surfaces of the vessels used in the purification of the sugar juice and are hard to remove.

In order to produce plantation white sugar, after or simultaneously with the lime treatment excess calcium hydroxide is precipitated as insoluble $CaSO_3$ by introducing gaseous $SO_2$ into the crude juice. This treatment is called sulfitation. The precipitates formed during sulfitation act as crystal germs and as surface for adsorption of other precipitation products. The sulfur dioxide needed for this step is produced in affiliated plants by burning of sulfur. The gaseous effluence formed during burning as well as by release of gases not adsorbed during the sugar juice treatment makes the process harmful to the environment.

The slurry formed during the sulfitation has to be processed by sedimentation or filtration to separate the purified sugar juice from the precipitated matter. The filter cake contains significant amounts of sugar juice and therefore has to be washed and dehydrated. The dehydrated filter cake may be used as lime fertilizer. For convenient use of this lime fertilizer, the moisture content has to be reduced to get a free-flowing powder after milling.

The thin juice obtained after these purification steps is concentrated by evaporation of water. A brown colouring of the thick juice is often observed due to caramelization of the sugar under pressure and to enzymatic and non-enzymatic browning reactions. The solid sugar is then recovered from the thick juice by crystallization. A small residual amount of the thick juice, which cannot be crystallized, is used as low-graded liquid sugar or molasses.

A disadvantage of the sulfitation process is in a limited long-term colour stability of the purified sugar meaning that the obtained sugar turns darker and more brownish with increasing storage time. This is caused by reactions of residual traces of $SO_2$ in the sugar. As a consequence the efficiency and profitability of the entire sugar purification process decreases, if parts of the purified sugar, originally produced in the highest quality class (refined sugar), can only be sold as second best quality (e.g. as direct white sugar).

US 5,262,328 discloses a non-toxic composition for the clarification of crude sugar-containing juices, in particular sugar cane juice, and related products. The purified juice may then be analysed for its sucrose content. The composition consists of A) aluminium chloride hydroxide, B) lime and C) activated bentonite. The bentonite contains calcium aluminium silicate. Preferably the composition also contains a polymeric flocculating agent. Components A) and B) are admixed, one with the other in concentrations sufficient, when added to the crude sugar-bearing juice, to neutralize its acetic character. Component C), in a dry form, is added to the mixture of A) and B). After admixture of components A) and B) to the crude juice the pH of the solution will range from about 6 to about 8, and preferably will be approximately 7. Component C) is a bentonite activated by introducing into the raw bentonite a suitable amount of an activator solution, e.g. a sodium carbonate solution, and then drying the material. Further, an acid activated bentonite may be used wherein a mineral acid, such as hydrochloric acid or sulfuric acid is added to a suspension of the raw clay in water and the mixture is heated to about 100˚C for several hours. The heated mixture is diluted with cold water and washed, for example in a filter press, to remove excess acid almost completely. The activated bentonite is dried to convenient moisture content, for example 8 % to 15 % by weight, and then pulverized to suitable size. The acid treatment eliminates alkali metals and calcium and reduces the content of magnesium, iron and aluminium. Further, bentonites, particularly those naturally occurring bentonites which already comprise substitutable bound alkali ions, can be activated by treatment with magnesium salts, e.g. magnesium sulfate, or magnesium salts in combination with alkali salts. The contaminants contained in the crude sugar juice are absorbed on the bentonite containing calcium aluminium silicate. The absorbed contaminants may then be encapsulated by a reaction of the bentonite with the lime. The composition, on addition to the crude cane juice, reacts very quickly by merely shaking or stirring to form a feathery or gelatinous precipitate which is readily separated from the sugar-containing solution by filtration. An optically clear solution with low colour is obtained which can be directly read on a polarimeter to determine the sucrose content.

In DE 197 48 494 A1 is disclosed a method for purification of crude juices obtained in the raffination of sugar. The crude juice is treated with a mixture of calcium hydroxide and a clay material selected from the group of smectites and kaolines, wherein the amount of calcium hydroxide in the mixture is less than about 70 wt%. The clay mineral, residual calcium hydroxide and calcium salts precipitated from the sugar juice are then separated from the purified thin juice. The bentonite used may be activated by acid, e.g. by spraying 3 wt.-% concentrated sulfuric acid on a calcium bentonite. The addition of calcium hydroxide for neutralization of the crude juice may be performed before, together with, or after addition of the (acid activated) bentonite. In one example the raw juice is neutralized by addition of a Ca$(OH)_2$ solution to give a pH of 8.0. An acid-activated bentonite is added followed by separation of the purified juice from the solid matter. In a further example at first the crude juice is treated with an acid-activated bentonite and the mixture is then neutralized by addition of $Ca(OH)_2$ solution to adjust a pH of 7. The purified juice is then separated from the solid matter.

In WO 2007/017102 is disclosed a method for purification of crude sugar juices wherein the crude sugar juice is treated with an adsorbent obtained by depositing an acid, preferably phosphoric acid, an iron salt and an aluminium salt on a clay, the pH of the obtained mixture is adjusted within a range of 6.0 to 8.0 by addition of $Ca(OH)_2$ and a purified sugar juice is separated from the mixture.

In EP 0 787 212 B1 a process for decolourisation of solutions is described in which coloured compounds contained in sugar solutions, sugars alcohols or betain are removed by flocculation with polyaluminium compounds.

It is an objective of this invention to provide an improved method for purification of crude sugar juices obtained by extraction of sugar-containing plants which can be performed in an environmental friendly manner and which allows to perform a rapid and efficient purification of crude sugar juice.

This objective is solved by a method according to claim 1. Preferred embodiments are defined in the depending claims.

According to the invention a method for purification of crude sugar juices obtained by extraction of sugar-containing plants is provided wherein:

- a crude sugar juice is provided;

- to the crude sugar juice is added an adsorbent, comprising a combination of:

    - an acid-activated clay, and

    - an aluminium salt;
      to obtain a mixture;

    - the pH of the mixture is adjusted within a range of 6.0 to 8.0; and

    - a purified sugar juice is separated from the mixture.

In the method according to the invention an adsorbent is used which has an exceptionally high adsorption capacity for contaminants contained in crude sugar juice. Without wishing to be bound by that theory the inventors believe, that the high adsorption capacity is due to the high surface of the clay and the aluminium salt both used as joint adsorbent. The purification achieved by the method according to the invention is significantly better than a result obtained by use of only one of the compounds, i.e. either the acid-activated clay or the aluminium salt. As a further advantage, with the method according to the invention, a purified sugar is obtained that has high storage stability, i.e. does not darken even when stored for a prolonged time.

In the manufacturing of the adsorbent, besides the clay and the aluminium salt preferably no other metal salts are added to the adsorbent, in particular no other metal salts containing polyvalent metal ions, i.e. metal ions having a valency of 2 or larger, in particular a valency of 2 or 3. The amount of other polyvalent ions present besides the aluminium ions is preferably less than 1 wt.%, in particular less than 0.5 wt.%, based on the weight of the adsorbent and calculated as metal oxide. Although no other metal salts besides the aluminium salt are added in the manufacturing of the adsorbent, small amounts of other ions, e.g. $Ca^{2+}$, $Mg^{2+}$ and $Fe^{2+/3+}$ may be present in the adsorbent. Such ions originate from the clay used in the manufacturing of the adsorbent. In particular, no iron salts are added in the course of producing the adsorbent. Therefore, the adsorbent does not contain water-soluble iron ions in excess of the soluble iron ions originally contained in the clay used as a starting material.

According to a preferred embodiment, the adsorbent only consists of the acid-activated clay and the aluminium salt.

Although not wishing to be bound by that theory, the inventors believe that the use of quite pure aluminium salt results in a precipitate with a high surface provided for bonding impurities contained in the crude sugar juice that may act in a similar way as pure polyaluminium salts however without leading to difficulties typically faced in the filtration or sedimentation of polyaluminium suspensions.

It is known from many applications, e.g. purification of drinking water or purification of water for beer brewing, that polyaluminium compounds can be used for an efficient flocculation of colloids, dyes and other impurities present. Pure polyaluminium compounds have also been used for clarification of sugar juices, however only on laboratory scale. However, when using polyaluminium compounds for clarification of sugar juices in technical scale, it has been observed, that flocculation with polyaluminium compounds results in very small gel flocks which are difficult to separate by sedimentation or filtration. Since sugar factories work with high through-put, use of polyaluminium compounds has not proven feasible in large-scale processes.

It now has been found that the excellent flocculation properties of the polyaluminium compounds in sugar clarification are maintained and a very good filtration is obtained when combining aluminium salts, e.g. polyaluminium compounds, aluminium chloride, aluminium sulphate etc. with acid-activated clays. This had been quite surprising, since acid-activated clays as such do not show efficient adsorbent properties in sugar clarification.

Although not wishing to be bound by that theory, the inventors believe, that the acid-activated clay is coated with polyaluminium compounds. The polyaluminium compound is bound to the surface of the acid-activated clay quite firmly forming a thin layer with long polyaluminium chains. Impurities are coordinated to a free end of the polyaluminium chain and thereby firmly bound to the adsorbent surface. Since such adsorbent particles have a much larger size than a polyaluminium flock, a much better colour removal and / or sedimentation or filtration is achieved.

When iron ions are present in the polyaluminium compound, polyhydroxometal complexes of shorter chain length are formed and therefore weaker bridges are formed between the clay surface forming a nucleus in the adsorbent and the impurity coordinated to the free end of the polyaluminium chain. Therefore the adsorbents used in the method according to the invention have better purification performance than adsorbents also containing iron compounds.

According to the invention, first a crude sugar juice is provided. The term "crude sugar juice" as used in combination with the method of the invention is to be understood as every sugar juice having a more intense colour or a higher content of contaminants than the purified sugar juice. The crude sugar juice may be obtained directly by extraction from sugar-containing plants. However, the crude sugar may have been purified already but still has insufficient colour intensity or contains an unacceptable amount of contaminants. The crude sugar juice preferably has a sucrose content of more than 10 g/l, in particular more than 25 g/l, particularly preferred 40 g/l to 200 g/l, most preferred 50 g/l to 150 g/l. The crude sugar juice is preferably obtained from sugar cane.

The crude sugar juice is coloured and contains contaminants to be removed by the method according to the invention. The contaminants usually contained in crude sugar juice are reviewed in: Helmut C.C. Bourzutschky, Color formation and removal - Options for the sugar and sugar refining industries: a review, Zuckerindustrie 130 (2005) Nr. 7, 545-553 and Zuckerindustrie 130 (2005) Nr. 6, 470-475. The colour of the crude sugar juice is mainly due to chlorophylls, anthocyanines, waxes and other compounds, like acyclic and aromatic anions, which are highly hydrated and of high molecular weight. Besides the natural colorants from the sugar cane, additional colour bodies are formed during the purification process. The most important reactions are the formation of melanins from polyphenols in the presence of polyphenoloxidase, also known as enzymatic browning reaction, and the Maillard reaction which takes place when reducing sugars and amines or aminoacids are present. Most of the coloured contaminants as well as colloids and proteins contained in the crude sugar juice are of anionic nature. On the adsorbent are deposited cations, in particular protons of the acid and aluminium ions. With addition of the adsorbent, the cations present on the clay surface may react with the coloured anionic components of the crude sugar juice, e.g. by complex formation, thereby producing insoluble compounds of high molecular weight. Aluminium ions deposited on the clay surface form quite stable complexes with the hydroxide groups of polyphenols and hydroxyketones.

The components of the adsorbent may be added to the crude sugar juice in any order. It is possible to first add the aluminium salt followed by addition of the acid-activated clay. However, it is also possible to first add the acid-activated clay followed by addition of the aluminium salt. According to a preferred embodiment, the acid-activated clay and the aluminium salt are added simultaneously. In a most preferred embodiment, the acid-activated clay and the aluminium salt are first combined to obtain an adsorbent and the adsorbent is then added to a crude sugar juice. Most preferred, the adsorbent is obtained by depositing the aluminium salt on the acid-activated clay.

The adsorbent may be added to the crude sugar juice in the form of a powder or together with a suitable solvent, e.g. water, in the form of a suspension. It is also possible to add the acid-activated clay in the form of a powder or a suspension and the aluminium salt in the form of an aqueous solution. In a particularly preferred embodiment, the preformed adsorbent comprising an acid-activated clay and an aluminium salt is added directly to the crude sugar juice. According to a further embodiment, the preformed adsorbent is first suspended in a small portion of crude sugar juice and the suspension is then added to the major portion of the crude sugar juice.

Since addition of the adsorbent will cause the pH of the crude sugar juice to become more acidic, the pH of the mixture is adjusted within a range of 6.0 to 8.0 by addition of a base. A preferred base is $Ca(OH)_2$. The calcium ions may react with anions contained in the crude sugar juice and contaminants contained in the crude sugar juice are precipitated on the clay surface and may further react with calcium ions introduced with the $Ca(OH)_2$-solution. The $Ca(OH)_2$ preferably is added as an aqueous solution or suspension (milk of lime) having a concentration of at least 4 g/l, preferably 5 - 6 g/l. Addition of the base, in particular calcium hydroxide, may be performed before, together with, or after addition of the adsorbent.

The adsorbent used in the method according to the invention has a high adsorption capacity and therefore may bind large amounts of contaminants to its surface. The adsorbent acts as a flocculant for fine particles dispersed in the crude sugar juice and therefore those fine particles may be removed by simple filtration or settling. Furthermore, the adsorbent adsorbs excess calcium hydroxide as well as precipitated calcium salts formed during refinement. As a further advantage of the claimed purification method, the amount of calcium hydroxide added to the crude sugar juice can be decreased in comparison to the known sulfitation process due to the lower acidity introduced into the crude sugar juice in the process according to the invention. Further, addition of the adsorbent improves sedimentation of the precipitate formed during purification of the crude sugar juice such that a turbidity reduction of the sugar juice of up to 98% may be achieved. As a further advantage of the method according to the invention, the sedimentation speed increases and therefore the purification of the crude sugar juice requires less time in the clarifying tank.

The precipitate formed comprises contaminants from the crude sugar juice in solid bound form and may be separated from the sugar juice by conventional methods, e.g. by filtration, sedimentation, settling or flotation. In an industrial large scale application of the process according to the invention, the precipitate may be removed from the bottom of a clarifier after sedimentation whereas the purified sugar juice forming a supernatant is sucked from the surface and is transported to an evaporator by pumping. Remains of sugar juice still present in the sediment may be separated from the used adsorbent in additional filtration steps. The residual filter cake may then be dried and milled to be used as a soil substrate. Advantageously, the filter cake does not contain environmentally hazardous contaminants.

By the method according to the invention the colour intensity and/or turbidity of the crude sugar juice can be reduced to at least about 10 to 25 % compared to commercially available adsorbents for sugar refinement, e.g. Clarit® AZP.

According to a preferred embodiment, the adsorbent is obtained by depositing the aluminium salt on the acid-activated clay before adding the adsorbent to the crude sugar juice.

The aluminium salt may be deposited on the acid-activated clay by any suitable method. According to a first embodiment, the aluminium salt and the acid-activated clay are simply mixed with each other by e.g. milling the acid-activated clay and the aluminium salt together in a suitable mill. Preferably, however, the aluminium salt is provided as an aqueous solution and the aqueous solution is deposited on the acid-activated clay by e.g. spraying the aluminium salt solution onto the acid-activated clay or by impregnating the acid-activated clay with the aluminium salt solution.

According to a further embodiment, the acid-activated clay is reacted with the aluminium salt in suspension. According to a further preferred embodiment, the acid activation of the clay is performed concurrently with the deposition of the aluminium salt on a clay. Particularly preferred, the clay is added in the form of a dry powder or dispersed in water to an aqueous mixture of the acid and the aluminium salt. Suitable acids are e.g. hydrochloric acid, sulphuric acid, citric acid and phosphoric acid, which is particularly preferred.

After impregnation of the acid-activated clay with the aluminium salt solution a moist adsorbent is obtained which may be used as such. However, it is also possible to first dry the adsorbent to remove excess water. Drying may be suitable e.g. when the adsorbent is packed after its production in a container and the container is shipped to a distant place of use. Preferably, the moisture content of the adsorbent is adjusted within a range of 5 to 20 wt.%.

According to a further embodiment, the adsorbents used in the method according to the invention can also be prepared by first providing the clay and then adding the Al-component and finally the acid in consecutive steps.

The adsorbent used in the method according to the invention comprises an acid-activated clay.

The acid-activated clay may be obtained by mixing an acid and a clay. Suitable acids are phosphoric acid, sulphuric acid, hydrochloric acid and citric acid. The acid and the clay may be added concurrently to the sugar juices or in any other order. The acid and the clay may also be mixed before addition to the crude sugar juice to obtain the acid-activated clay. Preferably, the amount of acid is selected within a range of 0.5 to 40 g/100 g of dry clay, particularly preferred 4 to 20 g/100 g, calculated as pure acid. As clay such natural clays may be used as also known for the bleaching of oils and fats.

According to an embodiment, the acid-activated clay is a surface-activated clay (SMBE; surface modified bleaching earth). Surface-activated clays are obtained by depositing an acid onto a clay, e.g. a natural clay. For depositing an acid onto a clay, e.g. an aqueous solution of the acid may be sprayed onto the clay. Other methods for depositing the acid onto the clay are also suitable, e.g. by soaking a dry clay with an aqueous solution of an acid. After depositing the acid onto the clay, the acid activated clay may be dried and milled, if suitable. SMBE is preferred in the method according to the invention. The clays for producing the adsorbent, in particular natural clays used in the embodiment of SMBE, are preferably selected of the group of smectite clay minerals, vermiculite and kaolin grouped minerals. Preferably, a bentonite containing clay is used as the starting clay. Bentonite mainly comprises montmorillonite. Montmorillonite belongs to the group of smectitic clays and has the formula $(Al_{3.2}Mg_{0.8}) (Si_8)O_{20}(OH)_4 (CO_3)_{0.8}$. Other suitable smectites are hectorite, nontronite, vermiculite and illite. The amount of acid deposited on the clay is preferably selected within a range of 1 to 40 wt.%, particularly preferred within a range of 2 to 35 wt.% and most preferred within a range of 5 to 30 wt.%. The wt.% refer to dried clay and 100 % acid. Excess acid deposited on the clay is not removed, e.g. by a washing step, but remains on the clay surface or in the clay pores. An aqueous suspension of 25 g of the acid-activated clay in 250 ml distilled water therefore has an acidic pH, preferably a pH within a range of 1 to 3, preferably 1.5 to 2. After deposition of the acid the acid-activated clay may be dried, preferably to a moisture content of 2 to 20 wt.%, particularly preferred 5 to 15 wt.% and most preferred 8 to 12 wt.%. The dried acid-activated clay may be milled according to known procedures to obtain e.g. a coarse powder. The particle size of the acid-activated clay is preferably selected within a range of 10 to 200 $\mu$m ($D_{50}$).

Because of their ion exchange capacity and due to their large surface area, the smectite clay minerals, vermiculite and kaolin grouped minerals together with the aluminium salt may break the colloids contained in the crude sugar juice and simultaneously adsorb the thereby formed precipitate. The activated clay therefore leads to similar results in colour reduction as the known sulfitation process, but being more sustainable than the latter. The disadvantage of the sulfitation process is in the exposure of production personnel to $SO_2$ and a partial release of $SO_2$ into the environment.

According to a preferred embodiment, the acid-activated clay is obtained by activating the clay by an acid selected from the group of phosphoric acid, citric acid and sulfuric acid. Other acids may be used as well, e.g. hydrochloric acid. But, as the refined sugar is intended for consumption by man, use of sulfuric acid and phosphoric acid does not pose any health problems. The activation may be performed by only using sulphuric acid or phosphoric acid or by using a mixture of sulphuric acid and phosphoric acid.

According to a preferred embodiment, at least part of the acid used for activating the clay is formed by phosphoric acid. The crude sugar juice contains bicarbonate, carbonate and oxalate anions which may react with calcium ions introduced by the addition of $Ca(OH)_2$ during neutralization of the crude sugar juice to form a precipitate that adheres to the walls of the vessel in the form of hard scales. The adsorbent used in this embodiment contains phosphate anions loosely bound to its surface. The phosphate ions have a higher affinity to the calcium contained in the juice than the respective bicarbonate, carbonate or oxalate anions and the speed of formation of calcium phosphate ($Ca_3(PO_4)_2$) is higher than the speed of formation of calcium carbonate and calcium oxalate. Therefore, calcium phosphate is formed instead of calcium oxalate or calcium carbonate and hard incrustations on the walls of the vessels are avoided completely or the amount of their formation may be at least reduced. As a further advantage, the calcium phosphate forms a soft sludgy complex which can be removed easily by agitation or high flow. Scales/incrustations eventually formed on the metallic surface of the vessel therefore can be removed easily.

According to a preferred embodiment the adsorbent comprises water extractable phosphate ions in an amount, calculated as $H_3PO_4$, of preferably within a range of 1 to 10 wt.%, in particular 2 to 8 wt.%, most preferred 2.5 to 5 wt.%.

According to another embodiment of the method according to the invention, the acid-activated clay used is a high performance bleaching earth (HPBE). Such high performance bleaching earth is obtained by leaching a raw clay with boiling strong acid, e.g. hydrochloric acid or phosphoric acid. During leaching aluminium ions are dissolved from the clay and, therefore, such high performance bleaching earth is characterized by a high pore volume and a high specific surface. HPBE have larger pores than natural clays and the pore volume is mainly formed by pores having a pore diameter of about 10 to 100 nm ($D_{50}$). Preferably, a high performance bleaching earth is used in the method according to the invention which has a pore volume of 0.1 to 0.8 cm$^3$/g and a specific surface of 50 to 350 m$^2$/g. The pore volume is defined as cumulative pore volume for pores with diameters of between 1 and 300 nm. After leaching, the solid matter is separated from the acid and then washed with water. The obtained high performance bleaching earth may then be dried to a moisture content of preferably 4 to 20 wt.%. Such HPBE may be obtained from commercial sources.

Any suitable aluminium salt may be used for obtaining the adsorbent. Suitable aluminium salts e.g. are chlorides, nitrates, sulphates, and chlorosulphates. According to an embodiment, the aluminium salt is selected from the group of aluminium chloride, aluminium sulphate, aluminium nitrate and mixtures of these aluminium salts.

Preferably, however, polyaluminium ions $[H_{2n+2}Al_nO_{3n+1}]^{n-}$ are used to prepare the adsorbent. n preferably is at least 2, particularly preferred at least 3. Some of the hydroxyl groups may be substituted by other anions, e.g. chloride or sulphate anions. According to an embodiment, n is selected to be less than 15, particularly preferred less than 10.

Solutions of polyaluminates are commercially available and are used e.g. for purification of drinking water. Such polyaluminium salt solutions, however, may also be produced by methods known to the skilled person, e.g. by starting with an acidic aluminium salt solution and digesting the pH value by addition of a base, e.g. to pH 4 - 5. Alternative routes are discussed below. The polyaluminates obtained by suitable preparation or commercially available solutions are mixtures of different species of polyaluminium ions, i.e. polyaluminium ions of different length. The aluminium concentration of those solutions, calculated as $Al_2O_3$, is preferably selected within a range of 2 to 30 wt.%. Preferably, sodium salts are used.

Particularly preferred are used polyaluminium chlorides, polyaluminium sulphates or mixed polyaluminium chloride sulphates. Such polyaluminium salts may be prepared e.g. by first preparing a solution of aluminium chloride by dissolving aluminium oxide hydrate with hydrochloric acid.

$$0.5\ Al_2O_3 \cdot 3\ H_2O + 3\ HCl \rightarrow AlCl_3 + 3\ H_2O$$

Preferably, the reaction is performed in a temperature range of 90 to 120 ˚C, particularly preferred 100 to 110 ˚C. The duration of the reaction depends on the amount of aluminium oxide and the amount of hydrochloric acid used. Preferably the reaction conditions are selected such, that the aluminium chloride solution is obtained within 3 to 10 hours, particularly preferred 4 to 8 hours. The amount of aluminium oxide and hydrochloric acid is selected such that an aluminium chloride solution is obtained having a concentration of $AlCl_3$ within a range of 20 to 30 wt%, particularly preferred 25 to 27 wt.%. After filtration to remove solid residues metallic aluminium is added to increase chemical basicity:

$$AlCl_3 + 2\ Al + 6\ H_2O \rightarrow 3\ Al(OH)_2Cl + 3\ H_2$$

Polyaluminium chloride is a well-known flocculant, e.g. for applications in drinking water purification, paper production or waste water treatment.

To obtain polyaluminium chloride sulphate (PACS), polyaluminium chloride is reacted with aluminium sulphate and sodium sulphate:

$$Al(OH)_2Cl + Al(SO_4)_3 + Na_2CO_3 + CO_2 \rightarrow [Al(OH)_xCl_y(SO_4)_zNa_w]_n$$

The polyaluminium salts do not have a defined composition. The ratio of aluminium, chloride, sulphate is preferably selected within the following ranges:

| compound | preferred | particularly preferred |
|---|---|---|
| $Al_2O_3$ (wt.%) | 8 - 15 | 10 - 12 |
| $Cl^-$ (wt.%) | 8 - 16 | 10 - 14 |
| $SO_4^{2-}$ (wt.%) | 1 - 3 | 1.8 - 2.5 |
| SG (g/cm$^3$) | 1.0 - 1.5 | 1.18 - 1.30 |
| Basicity (%) | 50 - 70 | 57 - 67 |

According to an embodiment, further an organic polymer acting as a flocculating agent is added to the crude sugar juice, preferably a polyacrylamide. The organic polymer preferably has a high molecular weight and preferably has a mol weight of 20.000 to $30 \times 10^6$ g/mol. The organic polymer is added in an amount of preferably 0,001 to 3 wt%, referred to the adsorbent. The organic polymer may be added before or after addition of the adsorbent or may be added simultaneously with the addition of the adsorbent to the crude sugar juice.

According to a preferred embodiment of the invention, the organic polymer is added during preparation of the adsorbent, i.e. the adsorbent additionally comprises the organic polymer already before addition of the adsorbent to the crude sugar juice. According to this embodiment, the organic polymer forms an integral constituent of the adsorbent.

According to an embodiment, for the preparation of the adsorbent, the organic polymer is added with vigorous stirring to water until a homogeneous solution is obtained. This solution is then added to the acid-activated clay onto which has been deposited the aluminium salt. The acid-activated clay and the aluminium salt may be provided as a dry powder or may be provided in the form of an aqueous suspension. After treatment of the combined acid-activated clay/aluminium salt with the flocculating polymer, the adsorbent is dried to a humidity of preferably less than 15 wt.%, particularly preferred 6 to 14 wt.%, most preferred 8 to 12 wt.%.

In this embodiment, the adsorbent comprises the flocculating polymer in a finely dispersed form which allows fast processing of the crude sugar juice. According to a further embodiment, additional flocculant may be added together with the adsorbent, which already comprises a flocculating polymer.

The polymeric flocculant is preferably a polyacrylamide polymer. The polymer may be charged cationically or anionically or may be non-ionically. Particularly preferred are anionic polyacrlyamides.

The polymeric flocculant preferably has a molecular weight within a range of 50.000 to $40 \times 10^6$ g/mol. The polymeric flocculant according to an embodiment may be a pure polyacrylamide or may be a polyacrlyamide copolymer, preferably a polyacrylamide/poly acrylic acid copolymer. Depending on the relative amount of amide groups and acid groups the polymer may be not charged or may be negatively charged. Preferably, a polyacrylamide/poly acrylic acid copolymer having a medium to strong negative charge is used. Typical flocculants which can be employed in the adsorbent are Praestol® 2640 from Ashland Water Technologies, D-47805 Krefeld, Germany, and Proquim 17-14, Setproquim Equipos, S.A. de C.V., Labrador No. 1469 Col Artesanos, C.P. 4SS98 Tlaqijepaqije, Jalisco, Mexico. Other preferred flocculant polymers which may be used in the process according to the invention are polyethyleneimine, polyamines and diethyldimethyl ammonium chloride (poly dadadmac).

According to a further embodiment of the method of the invention the pH-adjustment is performed in a stepwise manner. After extraction, the crude cane sugar juice typically exhibits a pH value between 5 and 6. In a first step of the embodiment, the adsorbent is added to the crude sugar juice. Since the adsorbent is acidic, the pH value of the sugar juice then may drop depending on the adsorbent dosage. By addition of a suitable base, preferably $Ca(OH)_2$ (milk of lime) the pH is then readjusted to a pH of 6 to 8, i.e. a pH of about neutral.

According to a further embodiment, the process according to the invention can be performed by first adding an appropriate amount of base to adjust a pH of preferably 8 to 9 and then adding the adsorbent to adjust the pH of the mixture to 6 to 8.

The amount of aluminium, calculated as $Al_2O_3$, added to the acid-activated clay to obtain the adsorbent is preferably selected within a range of 1 to 8 wt.-%, in particular 2 to 6 wt.-%, most preferred 3 to 5 wt.-%, based on the weight of the dry clay.

The adsorbent and the crude sugar juice are preferably mixed at a temperature of 10 ˚C to 90˚C, preferably 25 ˚C to 80 ˚C, in particular preferred at about room temperature.

After mixing the adsorbent and adjusting the pH the mixture is agitated for preferably 10 seconds to 30 minutes.

To improve clarification of the crude sugar juice, the mixture is preferably heated to a temperature within a range of 60 ˚C to 130 ˚C, more preferred 80 ˚C to 120 ˚C, particularly preferred 80 ˚C to 110 ˚C. Temperatures above 100 ˚C may be achieved with equipment allowing processing under increased pressure. When clarification of the crude sugar juice is performed under normal pressure, the mixture may be heated up to the boiling point of the mixture.

The duration of the heating depends on the colorization degree of the crude sugar juice and the amount of activated clay added to the mixture. Preferably, heating is performed for a period of 0.5 minutes to 2 hours, more preferred for a period of 1 minute to 30 minutes, preferably 5 minutes to 30 minutes, in particular 2 to 10 minutes.

For a purification of the crude sugar juice it is not necessary to add large amounts of the adsorbent and therefore losses caused by sugar retained in the filter cake may be minimized. Usually, the amount of adsorbent added to the mixture is selected within a range of 0.001 wt% to 3 wt%, preferably 0.001 to 1.5 wt%, particularly preferred 0.02 to 1 wt.%, based on the crude sugar juice.

Preferably, clays with a specific surface area of at least 30 $m^2$/g, preferably about 50 to 200 $m^2$/g, and a cation exchange capacity of at least 20 meq/100 g, preferably 30 to 100 meq/100 g, are used for the preparation of the adsorbent.

The adsorbent used in the method of the invention comprises a combination of an acid-activated clay and an aluminium salt.

According to an embodiment, the adsorbent basically does not contain water soluble iron ions and water soluble iron ions may be present only in trace amounts. Preferably, the adsorbent contains water soluble iron ions in an amount of less than 1000 ppm, preferably less than 500 ppm, particularly preferred less than 100 ppm. The content of soluble iron is determined by making a 10 wt.% suspension of the adsorbent in distilled water, subjecting it to boiling, performing a filtration step followed by ICP AES (Atomic Emission Spectroscopy) analysis of $Fe^{3+}$ and other methods.

The adsorbent used in the process according to the invention removes contaminants contained in the crude sugar juice quite efficiently. In a preferred embodiment, a further treatment of the mixture with $SO_2$ or $CO_2$ as in the methods according to the state of the art therefore is not necessary to remove excess calcium ions used for pH-adjustment. In a preferred embodiment the method according to the invention does not comprise any $SO_2$-treatment or $CO_2$-treatment of the crude sugar juice or of the mixture obtained by addition of the adsorbent to the crude sugar juice and adjustment of the pH by addition of calcium hydroxide. The adsorbent does not contain any hazardous components and therefore may be handled by the workers without difficulties. Further, no hazardous waste is produced by the process. The filter cake may be used as a fertilizer such that no problems as to deposition occur.

However, according to a further embodiment, the purification of the crude sugar juice with the above described adsorbent may be combined with a sulfitation process. With this embodiment, high purification efficiency is obtained at low $SO_2$ dosage. According to this embodiment, the crude sugar juice may be first treated with the adsorbent and Ca $(OH)_2$ is added, concurrently or consecutively, to adjust pH. The mixture may then be treated by introducing gaseous $SO_2$.

The method according to the invention may be used for the purification of all crude sugar juices. The method is particularly suitable for crude sugar juices obtained from sugar cane as sugar containing plant.

The invention is further directed to an adsorbent as used in the method described above. The adsorbent is a combination of an acid-activated clay and an aluminium salt deposited thereon. The aluminium salt preferably is a polyaluminium salt or a mixture of aluminium chloride and aluminium sulphate.

Preferred embodiments of the adsorbent have already been described above. For example, in a preferred embodiment, the adsorbent may comprise a polymer acting as a flocculating agent as an additional component. Further, according to another embodiment, the adsorbent may comprise phosphate ions.

The following non-limiting examples and comparative data further illustrate the method of this invention for the clarification of sugar bearing juices.

## METHODS

Determination of montmorillonite proportion by methylene blue adsorption

a.) Preparation of a tetrasodium diphosphate solution

5,41 g tetrasodium diphosphate are weighed with a precision of 0,001 g in a calibrated 1000 ml flask and the flask is filled up to the calibration mark with distilled water and shaken repeatedly.b.)

b.) Preparation of a 0,5 % methylene blue solution

In a 2000 ml beaker, 125 g methylene blue is dissolved in about 1500 ml distilled water. The solution is decanted and then distilled water is added up to a volume of 25 l.

0,5 g moist test bentonite having a known inner surface are weighed in an Erlenmeyer flask with a precision of 0,001 g. 50 ml tetrasodium diphosphate solution are added and the mixture is heated to boiling for 5 minutes. After cooling to room temperature, 10 ml $H_2SO_4$ (0,5 m) are added and 80 to 95 % of the expected consumption of methylene blue solution is added. With a glass stick a drop of the suspension is transferred to a filter paper. A blue-black spot is formed surrounded by a colourless corona. Further methylene blue solution is added in portions of 1 ml and the drop test is repeated until the corona surrounding the blue-black spot shows a slight blue colour, i.e. the added methylene blue is no longer adsorbed by the test bentonite.

c.) Analysis of clay materials

The test of the clay material is performed in the same way as described for the test bentonite. On the basis of the spent methylene blue solution is calculated the inner surface of the clay material.

According to this method 381 mg methylene blue/g clay correspond to a content of 100 % montmorillonite.

Silicate analysis

The clay material was totally disintegrated. After dissolution of the solids, the compounds were analysed and quantified by specific methods, e.g. ICP Atomic Emission Spectroscopy.

a) Sample disintegration

A 10 g sample of the clay material is comminuted to obtain a fine powder which is dried in an oven at 105 ˚C until constant weight. About 1.4 g of the dried sample is deposited in a platinum bowl and the weight is determined with a precision of 0.001 g. Then the sample is mixed with a 4 to 6-fold excess (weight) of a mixture of sodium carbonate and potassium carbonate (1 : 1). The mixture is placed in the platinum bowl into a Simon-Müller-oven and molten for 2 to 3 hours at a temperature of 800 - 850 ˚C. The platinum bowl is taken out of the oven and cooled to room temperature. The solidified melt is dissolved in distilled water and transferred into a beaker. Then concentrated hydrochloric acid is carefully added. After evolution of gas has ceased the water is evaporated such that a dry residue is obtained. The residue is dissolved in 20 ml of concentrated hydrochloric acid followed by evaporation of the liquid. The process of dissolving in concentrated hydrochloric acid and evaporation of the liquid is repeated once again. The residue is then moistened with 5 to 10 ml of aqueous hydrochloric acid (12 %). About 100 ml of distilled water is added and the mixture is heated. To remove insoluble $SiO_2$, the sample is filtered and the residue remaining on the filter paper is thoroughly washed with hot hydrochloric acid (12 %) and distilled water until no chlorine is detected in the filtrate.

**EP 2 236 630 A1**

b) Silicate analysis

The $SiO_2$ is incinerated together with the filter paper and the residue is weighed.

c) Determination of aluminium, iron, calcium and magnesium

The filtrate is transferred into a calibrated flask and distilled water is added until the calibration mark. The amount of aluminium, iron, calcium and magnesium in the solution is determined by FAAS.

d) Determination of potassium, sodium and lithium

A 500 mg sample is weighed in a platinum bowl with a precision of 0.1 mg. The sample is moistened with about 1 to 2 ml of distilled water and then four drops of concentrated sulphuric acid are added. About 10 to 20 ml of concentrated hydrofluoric acid is added and the liquid phase evaporated to dryness in a sand bath. This process is repeated three times. Finally $H_2SO_4$ is added to the dry residue and the mixture is evaporated to dryness on an oven plate. The platinum bowl is calcined and, after cooling to room temperature, 40 ml of distilled water and 5 ml hydrochloric acid (18 %) is added to the residue and the mixture is heated to boiling. The solution is transferred into a calibrated 250 ml flask and water is added up to the calibration mark. The amount of sodium, potassium and lithium in the solution is determined by ICP-AES.

X-ray-powder diffraction

The XRD spectra are measured with a powder diffractometer X'-Pert-MPD(PW 3040) (Phillips), equipped with a Cu-anode.

Specific surface and pore volume

Specific surface and pore volume is determined by the BET-method (single-point method using nitrogen, according to DIN 66131) with an automatic nitrogen-porosimeter of Micrometrics, type ASAP 2010. The pore volume was determined using the BJH-method (E.P. Barrett, L.G. Joyner, P.P. Hienda, J. Am. Chem. Soc. 73 (1951) 373). Pore volumes of defined ranges of pore diameter were measured by summing up incremental pore volumina, which were determined from the adsorption isotherm according BJH. The total pore volume refers to pores having a diameter of 2 to 350 nm. The measurements provide as additional parameters the micropore surface, the external surface and the micropore volume. Micropores refer to pores having a pore diameter of up to 2 nm according to Pure & Applied Chem. Vol. 51, 603 - 619 (1985).

Ion exchange capacity

The ion exchange capacity was determined according to the following method:

For the determination of the ion exchange capacity the clay material is dried at 150 ˚C for two hours. The dried material is allowed to react under reflux with a large excess of aqueous $NH_4Cl$ solution for 1 hour. After standing at room temperature for 16 hours, the material is filtered. The filter cake is washed, dried, and ground. The NH4 content in the clay material is then determined by elementary analysis of the residues using a Varion EL III CHNOS Analyzer (Elementar Analysensysteme GmbH, Husum, Germany). The amount and kind of the exchanged metal ions in the filtrate is determined by ICP-spectroscopy.

pH value:

25 g of the sample are suspended in 250 ml of distilled water and the suspension is boiled for 5 minutes. The resulting suspension is filtered and the filtrate is cooled to room temperature. The pH-value is determined by a pH-electrode.

Moisture content

About 500 g of the sample to be analysed are placed in a weighed glass dish and the dish is put into a drying oven adjusted to 110 ˚C. After 2 hours the glass dish is transferred into an exsiccator and cooled to room temperature. The moisture content is calculated according to the following formula

$$M = \frac{m_0 - m_d}{m_0} \cdot 100$$

where

M = moisture content;

$m_0$ = initial mass of the sample

$m_d$ = mass of the sample after drying.

ICUMSA Colour:

The colour density of the sugar juices was measured according to ICUMSA method GS 1 - 7 (1994).

Amount of water extractable anions (Cl, $H_2SO_4$) and cations ($Fe^{2+}$):

Into a 600 ml glass flask are weighed in about 25 g of the test sample and then 250 ml of distilled water is added. The suspension is subjected to the boiling temperature and the suspension is filtered immediately and the filtrate collected. The concentration of the individual anions and cations is determined by AAS and ICP AES.

Amount of water extractable phosphate

The amount of phosphate is determined according to DIN 38414, part 12.

Clarification of crude sugar cane juice

For the examples described below, the following general procedure was used for purification of crude sugar cane juice.

Principle of method

ICUMSA Colour and ICUMSA Turbidity of the sugar juice before and after treatment with an adsorbent is measured. The described procedure follows method GS1/3-7 (2002), Determination of the Solution Colour of Raw Sugars, Brown Sugars and Coloured Syrups at pH 7.0 - Official, Proc. 23rd Session ICUMSA, 2002, 111.

In the following, the sucrose concentration of the sugar juice is given in ˚Brix which is a very common unit in sugar production. 1 ˚Brix corresponds to a concentration of 1 wt.-% saccharose. The so-called Brix factor is the inverse of the concentration in ˚Brix.

Reagents

- 3% lime suspension

- pH 7.0 buffer.

- pH 4.0 buffer.

- 0.1N HCl.

- 0.1 N NaOH.

- 0.1% Anionic polymer SQJ83 solution (High molecular weight polyacrylamide).

Procedure

The sugar cane is burnt to eliminate the leaf. This process simulates the action taken on the field. Root and tip of the sugar cane are cut and crude sugar juice is extracted from the burned sugar cane by pressing with a lab press. To get rid of solid impurities, the sugar juice is passed trough a mesh No 45.

500 g of raw sugar juice are weighed in a 2 liters glass beaker and then a weighed amount of the adsorbent is added with vigorous stirring. Stirring is continued for 30 seconds and then under moderate agitation lime milk is added to adjust the pH of the mixture to 7.1 $\pm$ 0.4. The amount of lime milk added is annotated (gcal).

The neutralized suspension of the adsorbent in the raw sugar juice is placed in a microwave oven and heated to boiling. The heated suspension is taken from the oven and under moderate agitation with a glass stick, from 2 to 5 ppm anionic polymer are added (corresponding to about 0.5 to 2.5 ml per 500 g of sugar juice).

After sedimentation, a sample of the supernatant is taken to determine the 420 nm absorbance ($A_s$) in a 1 cm cuvette. For determining turbidity, a further sample is filtered through a Millipore membrane filter and 420 nm absorbance is measured ($A_f$) in a 1 cm cuvette. The sugar concentration is determined in refractometer with a measuring range of 0.1 - 60 ˚Brix with a further sample.

To determine the ICUMSA color a further sample is taken and filtered through a Millipore filter. The ˚Brix ($B_1$) is determined in a refractometer. The sugar concentration of the sample is then adjusted to 6.0 ˚Brix by adding distilled water. Then, the pH of the sample is adjusted to 7.1 $\pm$ 0.1 by adding HCl or NaOH (0.1N). After adjustment of the pH, the absorbance at 420 nm ($A_i$) is determined in a 1 cm cuvette.

Calculations

The amount of lime spent is determined as follows:

$$\texttt{Lime (mg/l) = gcal} \times \texttt{0.06}$$

The turbidity is expressed as the absorption difference of the sugar juice before and after filtration:

$$\texttt{Tu ICUMSA = } (A_s - A_f) \times \texttt{1000} \times \texttt{Brix factor.}$$

The ICUMSA color is calculated as follows:

$$\texttt{ICUMSA = } A_i \times \texttt{1000} \times \texttt{Brix factor.}$$

The Brix factor is determined with standard methods, e.g. refractometry. In the case of turbidity the Brix factor is determined directly with the filtrated sample ($B_1$), for the case of ICUMSA color the Brix factor is the one of 6˚ Brix according to the test method definition.

Example 1: Preparation of adsorbent 1

As polyaluminium salt the commercially available product Sachtoklar® from Sachtleben Chemie GmbH, Duisburg, Germany was used. Data of this product are summarized in table 1:

Table 1: Properties of polyaluminium compound employed for the preparation of adsorbent 1

|  | Sachtoklar® |
|---|---|
| pH | 2.6 |
| density (20˚C) (kg/l) | 1,21 |
| basicity (%) | 45 |
| Al (%) | 5.35 |
| Cl (%) | 10.2 |
| SO$_4$ (%) | 2.8 |

Table 2: physical data of Tonsil® Supreme 112 FF

| | Tonsil® Supreme 112 FF |
|---|---|
| Powder density (g/l) | |
| pH (100 g water + 10 g adsorbent, filtered) | 2,3 |
| Residue on sieve > 63 $\mu$m (wt.-%) | 41 |
| CEC (meq/100 g) | 46 |
| BET surface ($m^2$/g) | 190 |
| Cumulative pore volume (BJH) for pore diameter 1.7 - 300 nm ($cm^3$/g) | 0,7 |
| Average pore diameter (BJH), (nm) | 16,2 |

The polyaluminium salt was used as obtained.

In an Eirich®-mixer R02E was provided an acid-activated clay activated with 5 wt.% $H_2SO_4$ (SMBE; Tonsil® Supreme 112 FF; Süd-Chemie AG, Munich, Germany) (water soluble iron 5 ppm; the physical data of the acid-activated clay are summarized in table 2) and 20 wt.% polyaluminium salt (liquid, received as commercial product "Sachtoklar®") added and mixed for 30 minutes choosing the lowest adjustment for the rotational speed of the rotating drum and the highest adjustment for the mixer. A free flowing powder was obtained which was used directly in the following examples as "Adsorbent 1".

Example 2: treatment of aqueous brown sugar solution

As a model system for the efficiency of purification of sugar juices was used a 15 wt.% aqueous solution of a commercially available brown sugar. Such brown sugar corresponds to a white sugar obtained from sugar beet, which was coloured by addition of caramel colour.

40 g of the aqueous sugar solution was transferred into a centrifuge glass and an adsorbent was added in an amount as summarized in table 3. The sample was stirred at room temperature for 30 minutes at 700 rpm. Then the adsorbent was separated by centrifugation at 2500 rpm for 20 min. The extinction of the supernatant was determined at 420 nm in a 1 cm optical cell. The results are also included in table 3. For comparison, a sample of the sugar juice was purified by addition of Sachtoklar® in the same way as described above.

Table 3: purification of aqueous brown sugar solutions

| Adsorbent (wt.%) | | | Extinction 420 nm |
|---|---|---|---|
| Tonsil® Supreme 112 FF | Adsorbent 1 | Sachtoklar® | |
| -- | -- | -- | 0.807 |
| 0.5 | -- | -- | 0.451 |
| -- | -- | 0.5 | 0.807 |
| -- | 0.5 | -- | 0.044 |

By use of only a polyaluminium salt no decolourization of the sample is obtained. With use of an acid-activated clay (SMBE) only a poor decolourization of the sample is achieved. Surprisingly, an adsorbent comprising an acid-activated clay together with a polyaluminium chloride effects a significant decolourization of the sample.

Example 3: Preparation of adsorbents based on acid activated clay, synthetic aluminium compounds and phosphoric acid:

For the preparation, a raw clay was used having the properties listed in table 4. The presence of montmorillonite is confirmed by X-Ray powder diffraction.

Table 4: Characteristic data of the raw clay used for the preparation of adsorbents

| Silicate analysis | | |
|---|---|---|
| $SiO_2$ | % | 48,3 |
| $Fe_2O_3$ | % | 9,6 |
| $Al_2O_3$ | % | 19,8 |
| MgO | % | 3,3 |
| CaO | % | 2,5 |
| $K_2O$ | % | 3 |
| $Na_2O$ | % | 0,43 |
| $TiO_2$ | % | 0,83 |
| Loss on Ignition | % | 10,9 |
| **Ions** | | |
| Chloride | % | 0,02 |
| Sulfate (total) | % | 0,24 |
| **XRD-Analysis** | | |
| quartz | % | 4 |
| mica | % | 0 |
| kaolinite | % | 2,5 |
| feldspar | % | 0 |
| cristobalite | % | 0 |
| calcite | % | 1 |
| dolomite | % | 0 |
| others | | |
| $\Sigma$ quartz + cristobalite | % | 4 |
| **Basic data** | | |
| water content | % | 28,4 |
| MB adsorption | mg/g | 165 |
| montmorillonite | % | 38 |
| $CO_2$ | % | 3 |
| pH value | | 8,7 |
| whiteness | % | 27,2 |
| specific surface area | $m^2/g$ | 103 |
| Cation exchange capacity | meq/100 g | 32 |
| Water soluble iron content | ppm | 12 |

For the formulations the following synthetic aluminium compounds were employed:

Table 5: Synthetic aluminium compounds used for producing adsorbents of example 3

| Name | Abbr. | Empirical Formula | Content [wt.%] | | | |
|---|---|---|---|---|---|---|
| | | | $Al_2O_3$ | $Cl^-$ | $SO_4^{2-}$ | |
| Aluminium Sulphate | -- | $Al_2(SO_4)_3$ | 7,5 - 8,5 | 0 | 22 - 25 | liquid |

(continued)

| Name | Abbr. | Empirical Formula | Content [wt.%] | | | |
|------|-------|-------------------|-----------------|------|--------------|--------|
| | | | $Al_2O_3$ | $Cl^-$ | $SO_4^{2-}$ | |
| Aluminium Chloride | CLAL | $AlCl_3$ | 9 - 11 | 17 - 22 | 0 | liquid |
| Polyaluminum Sulfate | PAS | $[Al(OH)_xCl_y(SO_4)_z]_n$ | 9 - 12 | 10 - 16 | 2 - 6 | liquid |
| Sudfloc® P3160 Polyaluminum chlorosulfate | PACS | $[Al(OH)_{1,92}Cl_{1,90}(SO_4)_{0,16}Na_{1,14}]_n$ | 10 - 12 | 10 - 14 | 1,8 - 2,5 | liquid |
| Aluminium Chlorohydrate | ACH | $Al(OH)_2Cl.2H_2O$ | 20 - 24 | 7,0 - 12,0 | 0 | liquid |
| Sudfloc® P3160: Registered Trademark of Süd-Chemie do Brazil | | | | | | |

The raw clay was crushed and sieved to a particle size of less than 5 mm. A mixture of phosphoric acid (85 %, food grade quality) (optional $H_2SO_4$, concentration 98 wt.%) and of the respective aluminium compound was prepared according to the ratio provided in table 6. Further, an aqueous solution of 1 wt.% high molecular weight anionic polyacryl amide (Proquim 17-14, Setproquim Equipos, S.A. de C.V., Labrador No. 1469 Col. Artesanos, C.P. 4SS98 Tlaqijepaqije, Jalicso, Mexico) in water was prepared. The white polyacryl amide powder was added to the water with vigorous stirring and the mixture stirred until a clear solution was obtained.

The raw clay was dispersed with stirring in the phosphoric acid solution containing the aluminium compound to obtain a slurry. Then, the solution of the polyacrylamide was added to the slurry and the mixture was stirred for 15 minutes. The mixture was filtered and the solid residue was dried in a flash dryer to a moisture content (dry solid content) of 12 wt.%. The dry solid was milled with a hammer mill to a particle size of about 60 to 120 $\mu$m.

Table 6: Recipes for preparation of adsorbents

| Compound | Ads.2 | Ads.3 | Ads.4 | Ads.5 | Ads.6 |
|----------|-------|-------|-------|-------|-------|
| Raw Clay (wet) (g) | 500 | 500 | 500 | 500 | 500 |
| Water content of clay (wt.%) | 28 | 28 | 28 | 28 | 28 |
| $H_2SO_4$ (g) | 100,3 | 0.0 | 0.0 | 0.0 | 0.0 |
| $Al_2(SO_4)_3$ (g) | 406.8 | 0.0 | 0.0 | 0.0 | 0.0 |
| CLAL (g) | 0.0 | 507.1 | 0.0 | 0.0 | 0.0 |
| PAS (g) | 0.0 | 0.0 | 507.1 | 0.0 | 0.0 |
| PACS (g) | 0.0 | 0.0 | 0.0 | 507.1 | 0.0 |
| ACH (g) | 0.0 | 0.0 | 0.0 | 0.0 | 507.1 |
| $H_3PO_4$ (85%) (g) | 27.75 | 27.75 | 27.75 | 27.75 | 27.75 |
| Polymer (solid, g) | 2.56 | 2.56 | 2.56 | 2.56 | 2.56 |
| $D_{50}$ final product | 89.7 | 78.3 | 74.9 | 85.7 | 93.7 |

Example 4: Purification of crude sugar juice with adsorbents prepared in example 3

The adsorbents prepared according to example 3 were used for purification of crude sugar juice produced from sugar cane. The purification of the crude sugar juice was performed as described above. For comparison, a commercially available adsorbent (Clarit® AZP, Süd-Chemie Peru, Lima) was also used.

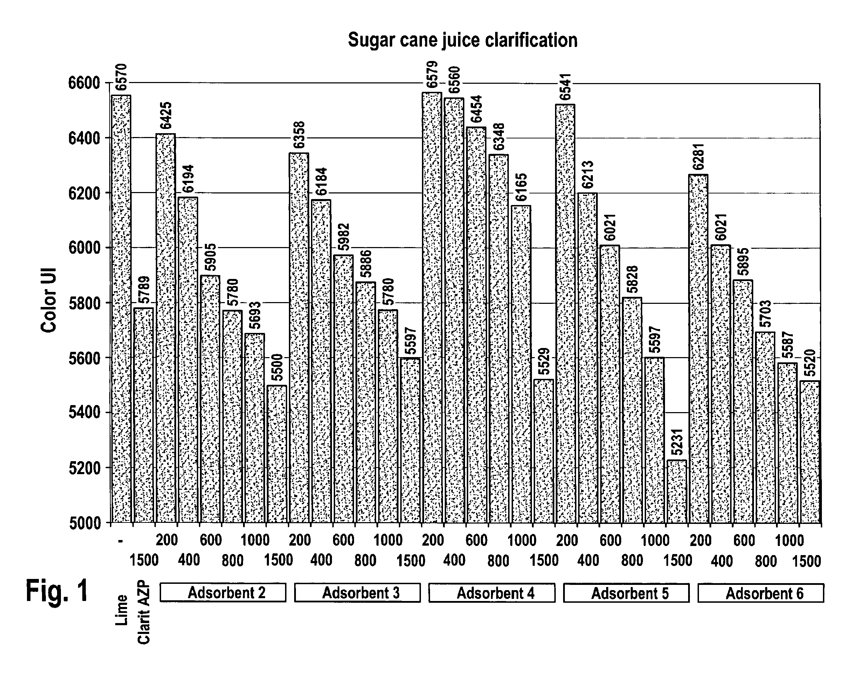

The data obtained are summarized in table 7 and are graphically presented also in fig. 1.

Table 7: Purification of crude sugar juices with adsorbents

| | Lime | Clarit AZP | Adsorbent 2 | | | | | | Adsorbent 3 | | | | | | Adsorbent 4 | | | | | |
|---|---|---|---|---|---|---|---|---|---|---|---|---|---|---|---|---|---|---|---|---|
| Initial pH at 40°C | 5.6 | 5.6 | 5.6 | 5.6 | 5.6 | 5.6 | 5.6 | 5.6 | 5.6 | 5.6 | 5.6 | 5.6 | 5.6 | 5.6 | 5.6 | 5.6 | 5.6 | 5.6 | 5.6 | 5.6 |
| Initial °Brix | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 |
| Adsorbent dosage, ppm | – | 1.500 | 200 | 400 | 600 | 800 | 1000 | 1500 | 200 | 400 | 600 | 800 | 1000 | 1500 | 200 | 400 | 600 | 800 | 1000 | 1500 |
| Contact time (min) | 30 | 30 | 30 | 30 | 30 | 30 | 30 | 30 | 30 | 30 | 30 | 30 | 30 | 30 | 30 | 30 | 30 | 30 | 30 | 30 |
| pH | 5.6 | 4.9 | 5.6 | 5.4 | 5.3 | 5.1 | 5.0 | 4.8 | 5.6 | 5.5 | 5.4 | 5.3 | 5.2 | 5.0 | 5.6 | 5.6 | 5.5 | 5.4 | 5.3 | 5.1 |
| pH adj. (lime) | 7.1 | 7.3 | 7.1 | 7.3 | 7.2 | 7.1 | 7.2 | 7.3 | 7.3 | 7.2 | 7.2 | 7.2 | 7.1 | 7.2 | 7.3 | 7.2 | 7.1 | 7.2 | 7.2 | 7.2 |
| Polymer ppm | 4 | 4 | 4 | 4 | 4 | 4 | 4 | 4 | 4 | 4 | 4 | 4 | 4 | 4 | 4 | 4 | 4 | 4 | 4 | 4 |
| °Brix adj. | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| pH adj. | 6.8 | 7.0 | 6.9 | 6.8 | 6.8 | 7.0 | 7.1 | 7.2 | 6.9 | 6.9 | 6.9 | 7.0 | 7.0 | 7.1 | 7.2 | 7.2 | 7.0 | 7.1 | 7.2 | 7.0 |
| Ads. 420nm | 0.862 | 0.611 | 0.67 | 0.64 | 0.61 | 0.60 | 0.59 | 0.57 | 0.66 | 0.64 | 0.62 | 0.61 | 0.60 | 0.58 | 0.68 | 0.68 | 0.67 | 0.66 | 0.64 | 0.57 |
| ICUMSA colour | 6570 | 5789 | 6425 | 6194 | 5905 | 5780 | 5693 | 5500 | 6358 | 6184 | 5982 | 5886 | 5780 | 5597 | 6579 | 6560 | 6454 | 6348 | 6165 | 5529 |
| Activity increase vs. sugar cane + lime | – | 11.9 | 2.2 | 5.7 | 10.1 | 12.0 | 13.3 | 16.3 | 3.2 | 5.9 | 8.9 | 10.4 | 12.0 | 14.8 | -0.1 | 0.1 | 1.8 | 3.4 | 6.2 | 15.8 |

Table 7: Continued

| | Adsorbent 5 | | | | | | Adsorbent 6 | | | | | |
|---|---|---|---|---|---|---|---|---|---|---|---|---|
| Initial pH at 40°C | 5.6 | 5.6 | 5.6 | 5.6 | 5.6 | 5.6 | 5.6 | 5.6 | 5.6 | 5.6 | 5.6 | 5.6 |
| Initial °Brix | 15.1 | 15.1 | 15.1 | 15.1 | 15.1 | 15.1 | 15.1 | 15.1 | 15.1 | 15.1 | 15.1 | 15.1 |
| adsorbent dosage, ppm | 200 | 400 | 600 | 800 | 1000 | 1500 | 200 | 400 | 600 | 800 | 1000 | 1500 |
| Contact time (min) | 30 | 30 | 30 | 30 | 30 | 30 | 30 | 30 | 30 | 30 | 30 | 30 |
| pH | 5.6 | 5.6 | 5.6 | 5.5 | 5.5 | 5.5 | 5.6 | 5.6 | 5.5 | 5.5 | 5.5 | 5.4 |
| pH adj. (lime) | 7.2 | 7.2 | 7.2 | 7.3 | 7.3 | 7.2 | 7.2 | 7.3 | 7.3 | 7.3 | 7.3 | 7.3 |
| Polymer ppm | 4 | 4 | 4 | 4 | 4 | 4 | 4 | 4 | 4 | 4 | 4 | 4 |
| °Brix adj. | 10.0 | 10.0 | 10.0 | 10.0 | 10.0 | 10.0 | 10.0 | 10.0 | 10.0 | 10.0 | 10.0 | 10.0 |
| pH adj. | 7.0 | 7.0 | 6.8 | 7.0 | 6.9 | 7.0 | 7.0 | 7.2 | 7.1 | 7.0 | 6.9 | 6.9 |
| Ads. 420nm | 0.68 | 0.65 | 0.63 | 0.61 | 0.58 | 0.54 | 0.65 | 0.63 | 0.61 | 0.59 | 0.58 | 0.57 |
| ICUMSA colour | 6541 | 6213 | 6021 | 5828 | 5597 | 5231 | 6281 | 6021 | 5895 | 5703 | 5587 | 5520 |
| Activity increase vs. sugar cane + lime | 0.4 | 5.4 | 8.4 | 11.3 | 14.8 | 20.4 | 4.4 | 8.4 | 10.3 | 13.2 | 15.0 | 16.0 |

EP 2 236 630 A1

The data of table 7 are also graphically displayed in fig. 1.

The results of the clarification tests show the suitability of the inventive adsorbents for colour and turbidity reduction from sugar cane juice.

The data also show that the adsorbents at same dosage exhibit a better performance for colour removal than the comparative sample (Clarit® AZP). This is documented by a higher reduction of the ICUMSA colour at a dosage of 1500 ppm. With adsorbents 4, 7 and 8 at a dosage of 1000 ppm a better colour reduction can be achieved than with the comparative sample (Clarit® AZP) with 1500 ppm dosage.

Example 5: Preparation of adsorbents with a mixture of aluminium chloride and aluminium sulphate and test of their turbidity reduction in cane sugar juice

Adsorbents according to the invention were prepared by mixing an acid-activated clay with a mixture of aluminium chloride and aluminium sulphate. The composition of the adsorbent is summarized in table 9.

Table 8: Composition of adsorbent 7

|  | Adsorbent 7 |
| --- | --- |
| Raw Clay (g) | 1000 |
| Moisture of the raw clay (wt.%) | 27 |
| $Al_2(SO_4)$ (g) | 517 |
| $AlCl_3$ (g) | 517 |
| $H_3PO_4$ (g) | 57 |
| Polyacrylamide as Powder (g) | 5.23 |
| Water | 100 |

The adsorbents were tested with sugar cane juice and were compared to commercially available product Clarit® AZP as a reference. As parameter for product performance, the turbidity reduction was chosen (determined in nephelometric turbidity units, NTU). Experimental details are summarized in table 9. As a further reference, the results for a purification process based on sulfitation as performed in a sugar processing plant are provided. The adsorbents effect a significantly lower turbidity than the reference adsorbent and a purification by sulfitation.

Table 9: Results of Sugar cane purification with adsorbent 7

| Products |  | Reference | Clarit® AZP | Adsorbent 7 |
| --- | --- | --- | --- | --- |
| Sulfitation process |  | Yes | No | No |
| Crude sugar cane juice | Weight of juice | 500g | 500g | 500g |
|  | ° Brix | 12.73% | 12.73% | 12.73% |
|  | Turbidity | 2.200 NTU | 2.200 NTU | 2.200 NTU |
|  | pH | 5.65 | 5.65 | 5.65 |
|  | Temperature | 38 ˚C | 38 ˚C | 38 ˚C |
| Adsorbent | Adsorbent dosage | 0.00 wt.% | 0.15 wt.% | 0.15 wt.% |
|  | Adsorbent weight | 0.00 g | 0.75 g | 0.75 g |
|  | Reaction time | 0 | 5 min | 5 min |
| Liming | pH-lime | 7.0/7.2 | 7.0/7.2 | 7.0/7.2 |
|  | Temperature | 100 ˚C | 100 ˚C | 100 ˚C |
|  | Polymer dosage | 1.2 ml | 1.2 ml | 1.2 ml |

(continued)

| Products | | Reference | Clarit® AZP | Adsorbent 7 |
|---|---|---|---|---|
| clarified sugar juice | ° Brix | N.D. | 12.86 % | 13.00 % |
| | Turbidity | 253 NTU | 110 NTU | 94 NTU |
| | pH | 6.80 | 6.68 | 7.84 |

**Claims**

1. Method for purification of crude sugar juices obtained by extraction of sugar containing plants, wherein:

   - a crude sugar juice is provided;
   - to the crude sugar juice is added an adsorbent, comprising a combination of:

      - an acid-activated clay, and
      - an aluminium salt
      to obtain a mixture;

   - the pH of the mixture is adjusted within a range of 6.0 to 8.0; and
   - a purified sugar juice is separated from the mixture.

2. Method according to claim 1, wherein the adsorbent is obtained by depositing the aluminium salt on the acid-activated clay.

3. Method according to claim 1 or 2, wherein the aluminium salt is a polyaluminium salt.

4. Method according to claim 3, wherein the polyaluminium salt is a polyaluminium chloride, a polyaluminium sulfate or a mixed polyaluminium chloride sulfate.

5. Method according to one of the preceding claims, wherein the pH is adjusted by addition of $Ca(OH)_2$.

6. Method according to one of the preceding claims, wherein further a flocculating organic polymer is added to the crude sugar juice.

7. Method according to claim 6, wherein the organic polymer is a polyacrylamide or a polydadmac or polyvinylamine or polyethylene imine.

8. Method according to one of the preceding claims, wherein the adjustment of the pH of the crude sugar juice is performed in a stepwise manner by adjusting the pH of the crude sugar juice within a range of 4 to 8, then adding the adsorbent and after addition of the adsorbent adjusting the pH of the crude sugar juice within a range of 5 to 9.

9. Method according to one of the preceding claims, wherein after adjusting the pH, the mixture is heated to a temperature within a range of 60 °C to 130 °C.

10. Method according to one of the preceding claims, wherein the amount of adsorbent added to the crude sugar juice is selected within a range of 0.005 wt.-% to 3 wt.-%, preferably 0.15 wt.-% to 0.5 wt.-%, based on the crude sugar juice.

11. Method according to one of the preceding claims, wherein the adsorbent contains water soluble iron salts in an amount of less than 1000 ppm, preferably less than 500 ppm, especially preferred less than 100 ppm calculated as Fe.

12. Method according to one of the preceding claims, wherein the crude sugar juice has a sugar content of at least 5 wt.%.

13. Method according to one of the preceding claims, wherein the sugar containing plant is a sugar cane.

14. Method according to one of the preceding claims, wherein the process does not comprise a sulfitation or carbonation step.

15. Adsorbent, comprising a combination of an acid-activated clay an aluminium salt deposited thereon.

Fig. 1

Europäisches
Patentamt

European
Patent Office

Office européen
des brevets

**EUROPEAN SEARCH REPORT**

Application Number

EP 09 00 4912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 1 748 086 A (SUED CHEMIE AG [DE]) 31 January 2007 (2007-01-31) * paragraphs [0001], [0006], [0011] - [0021], [0024] - [0031], [0034] * * example 1 * ----- | 1-15 | INV. C13D3/02 C13D3/12 B01J20/04 B01J20/12 C23C22/05 |
| X,D | US 5 262 328 A (CLARKE STEPHEN J [US] ET AL) 16 November 1993 (1993-11-16) * column 1, line 66 - column 1, line 18 * * column 2, lines 48-56 * * column 3, lines 17-28 * * column 3, lines 47-64 * * column 4, lines 43-55 * * column 5, lines 8-65 * * claims 1-3 * | 1,5-14 | |
| A | * column 2, lines 9-12,41,42 * ----- | 2-4 | |
| D,A | DE 197 48 494 A1 (SUED CHEMIE AG [DE]) 6 May 1999 (1999-05-06) * column 2, lines 54-68 * * column 3, lines 23,24 * ----- | 1-15 | |
| D,A | WO 96/15274 A (CULTOR OY [FI]; PAANANEN HANNU [FI]; WEN TONG [FI]) 23 May 1996 (1996-05-23) * page 1, lines 3-10 * * page 4, lines 1-27 * ----- | 1-15 | TECHNICAL FIELDS SEARCHED (IPC) C13D B01J C23C |
| A | RU 2 244 009 C1 (GOSUDARSTVENNOE OBRAZOVATEL'NOE UCHREZHDENIE VORONEZHSKAJA ...) 10 January 2005 (2005-01-10) * abstract * ----- | 1-15 | |
| A | DE 42 00 479 A1 (SUED CHEMIE AG [DE]) 16 July 1992 (1992-07-16) * page 3, lines 6-8,44-54 * ----- | 15 | |

The present search report has been drawn up for all claims

| Place of search | Date of completion of the search | Examiner |
|---|---|---|
| Munich | 14 August 2009 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 4912

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2009

| Patent document cited in search report | | | Publication date | Patent family member(s) | | | Publication date |
|---|---|---|---|---|---|---|---|
| EP 1748086 | A | | 31-01-2007 | CN | 101243194 | A | 13-08-2008 |
| | | | | EC | SP088205 | A | 26-03-2008 |
| | | | | WO | 2007017102 | A1 | 15-02-2007 |
| | | | | US | 2009050135 | A1 | 26-02-2009 |
| US 5262328 | A | | 16-11-1993 | NONE | | | |
| DE 19748494 | A1 | | 06-05-1999 | AU | 2151599 | A | 31-05-1999 |
| | | | | WO | 9924623 | A2 | 20-05-1999 |
| | | | | ZA | 9809833 | A | 28-04-1999 |
| WO 9615274 | A | | 23-05-1996 | AT | 243763 | T | 15-07-2003 |
| | | | | AU | 3873895 | A | 06-06-1996 |
| | | | | CA | 2204900 | A1 | 23-05-1996 |
| | | | | DE | 69531158 | D1 | 31-07-2003 |
| | | | | DE | 69531158 | T2 | 08-04-2004 |
| | | | | EP | 0787212 | A1 | 06-08-1997 |
| | | | | FI | 945376 | A | 16-05-1996 |
| | | | | US | 5932016 | A | 03-08-1999 |
| RU 2244009 | C1 | | 10-01-2005 | NONE | | | |
| DE 4200479 | A1 | | 16-07-1992 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5262328 A
- DE 19748494 A1
- WO 2007017102 A
- EP 0787212 B1

**Non-patent literature cited in the description**

- **Helmut C.C. Bourzutschky.** Color formation and removal - Options for the sugar and sugar refining industries: a review. *Zuckerindustrie,* 2005, vol. 130 (7), 545-553
- *Zuckerindustrie,* 2005, vol. 130 (6), 470-475
- **E.P. Barrett ; L.G. Joyner ; P.P. Hienda.** *J. Am. Chem. Soc.,* 1951, vol. 73, 373
- *Pure & Applied Chem.,* 1985, vol. 51, 603-619